# EUROPEAN PATENT SPECIFICATION

(11) **EP 4 533 127 B1**
(45) Date of publication and mention of the grant of the patent: **18.03.2026**
(21) Application number: 23744257.9
(22) Date of filing: 02.06.2023
(51) Int. Cl.: G01S 7/495, F41H 11/02, F41G 7/00, F41G 7/22

(54) **DEVICE FOR ANTI-AIRCRAFT SPOOFING AND JAMMING AND AN AIR DEFENSE SYSTEM COMPRISING SAID DEVICE**
VORRICHTUNG FÜR VERTÄUUNGS- UND VERKLEMMUNGSSCHUTZ EINES FLUGZEUGES UND LUFTABWEHRSYSTEM MIT DIESER VORRICHTUNG
DISPOSITIF DE LEURRAGE ET DE BROUILLAGE ANTI-AÉRONEFS ET SYSTÈME DE DÉFENSE AÉRIENNE COMPORTANT LEDIT DISPOSITIF

(30) Priority: 02.06.2022 WO PCT/SI2022/050018
(43) Date of publication of application: 09.04.2025
(73) Proprietor: Carboteh Technologies d.o.o., 1000 Ljubljana (SI)
(72) Inventor: KNEZEVIC, Srecko, 1000 Ljubljana (SI); PETERCA, Primoz, 1000 Ljubljana (SI); SERNEC, Radovan, 1000 Ljubljana (SI); ZUPANCIC, Luka, 1000 Ljubljana (SI); KOSMAC, Jure, 1000 Ljubljana (SI)
(74) Representative: Macek, Gregor
(86) International application number: PCT/SI2023/050008
(87) International publication number: WO 2023/234878

(56) References cited:
- US-B1- 8 082 832
- US-B2- 10 567 106
- CARBOTEH: "BANS-brochure-za listanje2", 10 June 2022 (2022-06-10), pages 1 - 3, XP093082436, Retrieved from the Internet <URL:https://assets.website-files.com/62b1c7fa38a6a76aadf84fd1/62b1c901f35b6f1b821d448a_BANS-brochure-WEB.pdf> [retrieved on 20230915]

## Description

The invention refers to a counter countermeasures device, hereinafter referred to as CCM device, for use in an anti - aircraft combat. In one embodiment the CCM device of the invention together with an anti-aircraft weapon system forms an air defense system. With the use of the CCM device in conjunction with a real anti-aircraft missile launcher, the efficiency of the anti-aircraft combat is highly improved, i.e., the probability of the target or the aircraft hit is highly improved.

In the context of this application "aircraft" is referring to any device or machine capable of atmospheric flight, such as airplane, helicopter, unmanned aerial vehicles, drone, cruise missile with installed anti-aircraft missile warning and detection system.

CCM device is capable of operating in spoof mode, i.e., generating and emitting electromagnetic radiation of appropriate wavelengths, i.e. simulated missiles, by the EM source unit that mimic real anti-aircraft missiles (generating and emitting missile profiles), and, in this way, the anti-aircraft missile launch warning and detection system (MLWDS) installed on aircrafts are deceived, wherein an alarm is triggered by which the countermeasures-release device automatically, semi-automatically or by means of a pilot, releases the countermeasures, for example flares or directional infrared countermeasures.

CCM device according to the invention is capable of operating in spoof and jam mode and switching between both modes. The mode of operation is dependent on the selection of the output power of the EM source unit and the distance to the target. The selection of the output power, i.e., the decrease of intensity and radiance, may be done with a mechanical cover with opening, through which only a part of the EM radiation is emitted or with an electronic solution, decreasing driving current of the EM sources, or combination thereof. User can change between modes by placing or removing the mechanical cover over the EM sources for each triggering of device separately. The other option is to press a button prior to or while pressing the trigger to electronically achieve the same effect. User can apply both modes selectively during operation. While target is at longer distances only spoofing is desirable with opened or partially covered EM sources. While the target approaches, user can fully open EM sources thus operating in jamming mode, i.e., to emit as much as possible EM radiation in a very short time period, to saturate the detector for incoming missile on aircraft.

Another aspect of the invention is an air defense system comprising said device. An air defense system is comprised of at least one CCM device and at least one anti-aircraft weapon system configured for launching at least one anti-aircraft missile, wherein emitting of simulated missiles, and launching of anti-aircraft missiles are coordinated.

Thus, if a real anti-aircraft missile is simultaneously or with a certain time delay launched together with the simulated missiles, i.e., during the use of the CCM device in spoof and/or jam mode in the air defense system, the probability of hitting the target with a real anti-aircraft missile is greatly improved.

Various anti-aircraft missile simulation systems have been developed for ground-based and airborne launch applications, particularly for testing and/or calibration purposes of sensors operations on the aircraft, i.e., anti-aircraft missile launch warning and detection systems.

In patent document US10288234B1 a handheld UV light stimulator is disclosed intended to operate in UV spectrum and for test purposes of sensors operations on the aircraft, specifically to achieve lightweight handheld operation and mobility.

In patent document US5693951 a missile launch and flyout simulator is disclosed intended to operation in UV and IR spectrum and for triggering the missile warning on aircraft and is also designed for mobile and remotely triggered operation, however, said simulator is largely based on analog electronics and focuses on design of source and missile plume signature.

In patent document US7528396 a solid state simulator of missile UV signatures is disclosed for test and training purposes with the use of solid state UV sources. In patent document US8185350B2 a verification of a missile approach warning system is disclosed intended to operation in UV and IR spectrum and for test and calibration purposes of sensors operations on aircraft, specifically to achieve firm direct attachment to sensors on aircraft or other systems.

In patent document US20080169423A1 a test apparatus for testing the operability of a warning system for approaching guided missiles is disclosed intended to operation in UV spectrum and for test purposes of sensors operations on aircraft, specifically to achieve mobility.

In patent document US10598468B2 a system for simulation of missile signatures is disclosed for simulating missile plumes in UV and IR regions and details the wave generation with LED, focusing on a device. However, there is no description of a particular usage and/or an integration embodiment of the sources themselves.

In patent document US9791558B2 a two-color signature simulation IR sources test with lasers is disclosed intended to operation in IR spectrum with laser sources and for test purposes of sensors operations on aircraft, specifically to achieve low cost of sensor testing at multiple IR wavelength within a single system.

Known CCM devices were disclosed in prior art in a document "BANS-brochure-za listanje2" of the company Carboteh Technologies d.o.o. of 10 June 2022, available at https://assets.website-files.com/62b1c7fa38a6a76aadf84fd1/62b1c901f35b6f1b821d448a_BANS-brochure-WEB.pdf.

The disclosed systems are not designed to be part of the handheld anti-aircraft weapon as in the preset application, where the CCM device is designed to be part of the small arms carried by the soldiers, or anti-aircraft weapon systems and to be intended to be used in combat situations. Further, in prior art documents also no human or automatic coordination of the proposed systems with the real missile system, or real anti-aircraft gun systems is disclosed.

The main purpose of this invention is to overcome these drawbacks by providing a CCM device designed to be part of the small arms carried by the soldiers also, for use in an anti - aircraft combat and consequently together with an anti-aircraft weapon system, to be used in real combat situations.

The invention is defined the independent claims, preferred embodiments are defined in dependent claims.

The invention is further described in detail below and presented in figures, where:
Fig. 1 schematically presents one embodiment of the CCM device - exploded view (cover is not present);
Fig. 2 schematically presents one embodiment of the CCM module - front view;
Fig. 3 schematically presents one embodiment of the CCM module - rear view;
Fig. 4 schematically presents another embodiment of the CCM device - as standalone and self-contained device;
Fig. 5 schematically presents another embodiment of the CCM device - attached to a gun;
Fig. 6 schematically presents yet another embodiment of the CCM device - attached to a vehicle;

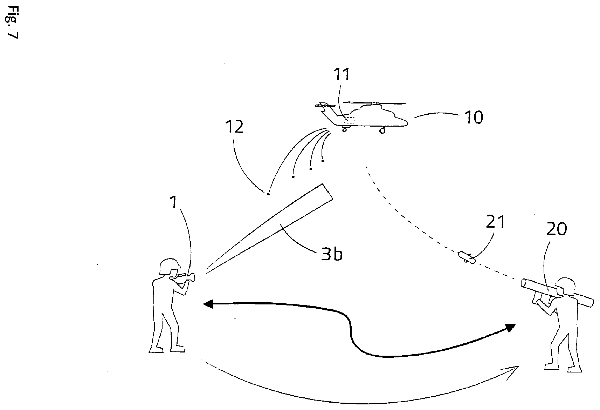

Fig. 7 schematically presents one embodiment of the use of the CCM device in operation;

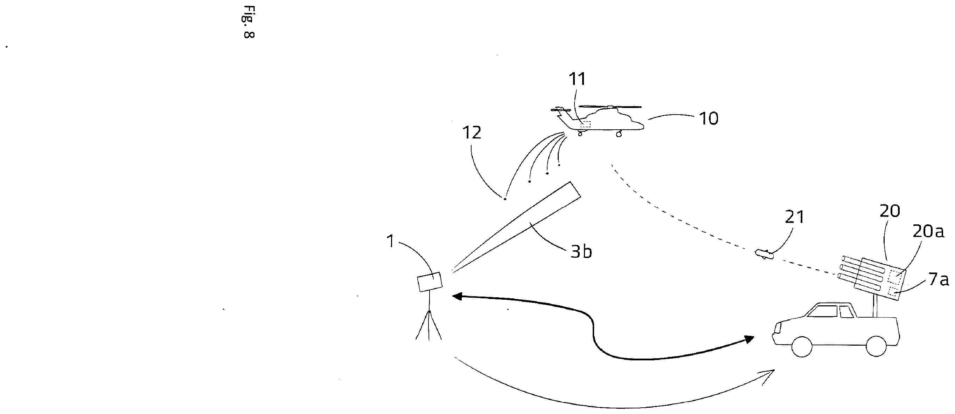

Fig. 8 schematically presents another embodiment of the use of the CCM device in operation;

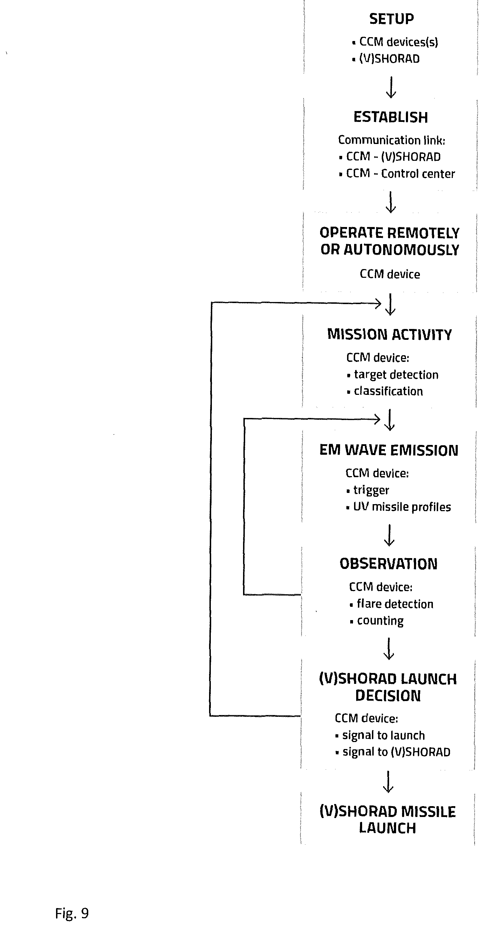

Fig. 9 is a flow chart of one embodiment of the air defense system operation and method.

The CCM device 1 according to the invention is comprised of a CCM module 1a, a trigger unit 5 and a power unit 6, wherein said CCM module 1a is comprised of a source unit 3 of electromagnetic radiation (hereinafter referred to as the EM source unit 3), comprising multiple EM sources 3a emitting EM radiation, an electronic control circuit 4 with processing, memory, and EM source unit 3 driving capabilities. The CCM device further comprises a cover 40 removably attachable to the CCM module 1a on its front end, wherein said cover 40 is opaque to the emitted EM radiation and has at least one opening 41 transparent to the emitted EM radiation, through which only a part of the EM radiation is emitted when the cover 40 is in a closed position, for enabling operating of said CCM device 1 in spoof and jam mode and switching between both modes by selecting either closed position or opened position of the cover 40.

When the cover 40 is in closed position, i.e., placed over the EM source unit 3, only a part of the EM radiation is emitted, thus enabling operation of the CCM device 1 in spoof mode, because the spoof mode in general requires lower power of EM radiation to reach the target than the jam mode. When the cover 40 is in opened position, i.e., removed from the EM source unit 3, all the EM radiation is emitted, thus enabling operation of the CCM device 1 in jam mode or spoof mode, depending on the emitted EM radiation and the distance of the target. By placing or removing the cover 40, switching between both modes is enabled. When the cover 40 is in closed position the emitted EM radiation is reduced while the generated EM radiation remains the same.

The EM source unit 3 is configured for emitting EM radiation of certain wavelengths, thereby simulating missile or missiles 3b or sequences thereof or jamming. The EM source unit 3 comprises multiple EM sources 3a emitting light of the same wavelength or emitting light of different wavelengths operating simultaneously and/or with a time shifted difference. Preferably, EM sources 3a are arranged in arrays, wherein each individual array emitting light of the same wavelength or emitting light of different wavelengths.

The EM source unit 3 is configured for emitting UV light in solar blind region, usually < 300 nm, and/or IR light in short wave region (SWIR), usually 0,7 µm - 3 µm or medium wave region (MWIR), usually 3 µm - 12 µm, and/or laser light in IR region, usually in SWIR region, or UV light in solar blind region (< 300 nm). Preferably the EM source unit 3 is configured for emitting UV light in solar blind region, i.e. UVC LED source. The EM radiation can be suitably collimated with one or several known methods, e.g., lens, reflective parabola, or a combination thereof, to achieve higher photon flux per unit area (irradiance) and/or flux per solid angle (intensity) and/or flux per unit area per unit solid angle (radiance) in a required direction, i.e., the direction toward target.

Each simulated missile 3b or individual jamming mode is defined by a profile or signature (hereinafter referred as a profile), which comprises duration, wavelength and intensity of EM radiation emitted by each individual EM source 3a. The purpose of simulated missile 3b is triggering MLWDS 11 to release countermeasures 12, e.g., flares or directional infrared countermeasures. The purpose or individual jamming mode is to saturate the detector on aircraft 10.

Namely, it is desirable that the profile of a simulated missile 3b is such that satisfactory mimicking of the anti-aircraft missile 21, i.e., missile rocket motor activity, of its fume compositions exhaust or of its emitted heat, is achieved, so that the anti-aircraft missile warning and detection systems 11 installed on aircrafts 10 recognizes it as a real missile 21 and triggers the appropriate alarm.

In a preferred embodiment, the EM source unit 3 is configured for emitting non-coherent UV light in solar blind region and is implemented as an array of individual EM sources 3a implemented as UVC LEDs in combination with collimation system composed of a single large lens or multiple large lenses that cover the whole area of the UVC LEDs array, or a lens is dedicated to a single UVC LED or several of them. A combination of both is also possible.

The profiles of the simulated missiles 3b successively generated from UVC LED source can be always the same or can change in shape or can change in duration or can change in shape and duration. Changing simulates the missile type change or missile position change in relative position vs the target MLWDS system and improves detection probability.

The UVC LED array and lens is protected with protective glass.

All lens and protective glass are suitably transparent (e.g., at least 90 % transparent) to wavelengths emitted by EM sources 3a, in mentioned case UV in solar blind region.

A set of gaskets is situated between UVC LEDs, lens, protective cover glass to assure full resistance to dust and water, e.g., to IP65 level. Such solution is crucial for field operation in harsh environments.

The trigger unit 5 is configured for selecting the profile or a sequence thereof, and for activating the CCM device 1, i.e., activating the UVC LED source, including triggering the simulated missiles 3b or jamming mode. Trigger unit 5 comprises triggering means for interacting between the user and the trigger unit. Triggering means may be implemented as a switch, switch with safety cover or button or button with safety cover. To achieve multifunctionality of the trigger unit 5, the trigger unit 5 may be implemented with several buttons or switches or for example as electro-mechanical multi positional trigger. Due to operation in harsh environments and to prevent unwanted triggering, it is possible to implement the trigger unit 5 also with safety cover as an integrated assembly, so called toggle switch safety cover.

In one embodiment the electronic part of the trigger unit 5 is either implemented separately or integrated into the electronic control circuit 4.

Preferably, the electronic part of the trigger unit 5 is integrated into the electronic control circuit 4. In this way the reliability of the CCM device 1 is increased, the number of connections between building blocks is minimized and the power consumption is lowered.

In a memory which is part of the electronic control circuit 4 at least one profile is stored. Preferably, several profiles are stored in the memory, whereby each profile of the simulated missile 3b is specific to one type of known anti-aircraft missiles 21 or to a generic type with generally similar profile characteristic. In the memory also the sequences of profiles of simulated missiles 3b can be stored.

Known anti-aircraft missiles 21 are for example missiles 21 on MANPADS (Man-portable Air-Defense System), VSHORAD (Very Short Range Air Defence) and SHORAD (Short Range Air Defence) systems. The advantage of several profiles of the simulated missile 3b stored in a memory is, that different profiles or the sequences of different profiles are emitted which mimic different anti-aircraft missiles 21, thus the deception of the anti-aircraft missile warning and detection systems 11 is greatly improved.

In one embodiment also specific UVC emission profiles, i.e., profiles for jamming mode, are stored in a memory. Such jamming profiles are designed to emit as much as possible UVC photons in a very short time period, to saturate the UVC detector on aircraft. Jamming is effective since it blinds the aircraft in a sense that no further detection of real missile profiles is possible, until detector returns to its normal state of operation. And this typically lasts 5 - 10 seconds, during which the aircraft is completely exposed to real missiles or actions from other anti-aircraft systems. In combination with the cover 40 in a closed position such CCM device 1 can also be used in spoof mode.

The electronic control circuit 4 is configured for driving the EM source unit 3, for storing the profiles of simulated missiles 3b and sequences thereof, for receiving an input from the trigger unit 5 and for running the CCM software module which operates the CCM device 1.

In one embodiment, the electronic control circuit 4 has connection means for enabling cable or wireless connection between the electronic control circuit 4 and other electronic devices, such as for example an external computer for programming the electronic control circuit 4, including uploading, modifying, and updating the profiles. In this manner such CCM device 1 can be adapted to operate for longer lifetimes and be current with newly developed missile profiles.

Cable connection is achieved for example by USB standard, wireless connection is achieved for example by Bluetooth standard, Wi-Fi standard or combination thereof.

Preferably, the communication through the connection means is encrypted for safe communication.

The profiles to be generated and emitted can be selected manually or automatically. The selection is done by the trigger unit 5. In automatic mode the profiles can be automatically selected from the memory: one same profile or two or more same or different profiles on rotating basis, sequentially or random. Random selection is preferred since it aids in successful deception of MLWDS 11. Further advantage of random selection is, since aircrafts 10 may have more sophisticated MLWDS 11 which can recognize the profile of the simulated missile 3b as a fake missile, by randomly emitting different profiles the chances that MLWDS 11 will not recognize the simulated missile 3b profile as a fake missile are greatly improved.

Power supply unit 6 consists of suitable battery or a set of batteries known from the state of the art and is for example implemented as lithium-ion type with control electronics to prevent over discharging and monitor state of charge of batteries.

The CCM module 1a is placed into a housing 2, that is suitably water and dust protected and/or sealed, and rugged for out-door operation and military like handling to withstand also operation in wide temperature range, e.g. -30 degrees C to +50 degrees C. Preferably the housing 2 is from a light weight metal, from extruded or 3D printed metal, preferably with good thermal conductivity, e.g. aluminum. In one embodiment a power unit 6 may also be placed into the housing 2.

The cover 40 is opaque to UVC light and is from durable, rugged material, e.g., ABS, metal. The cover 40 serves two purposes: protection of the UVC light source 3a and reduction of emitted UVC light power, i.e., enabling the selection between spoof and jam mode. The cover 40 has integrated at least one opening 41 transparent to UVC light. Transparent opening 41 may be of different shapes (rectangular, cross shape, arbitrary shape) and is positioned such that it covers several UVC LEDs 3a. Its shape can match the shape of a group of UVC LEDs 3a. Through this transparent opening 41 only a small proportion of all UVC light is emitted. Size of the opening 41 determines the effective emitted power of the UVC source. This transparent opening 41 is required for operating in spoofing mode regardless of the distance, and is suitable also on shorter distances, e.g., < 1.5 km.

In one embodiment the cover 40 is attached to the housing 2 on its front end via a hinge assembly 42. Namely, the cover 40 is opened in circular motion due to its attachment to the hinge assembly 42.

The cover 40 is held in place when in a closed position or in an opened position by a mechanical connection or by a magnetic connection or by combination of both.

In one embodiment, the holding of the cover 40 in place when in a closed position is achieved either by a mechanical connection or by a magnetic connection or by combination of both. For a mechanical connection a latch 43 is attached to the housing 2 on the opposite side of the housing 2 where the hinge assembly 42 is attached. The latch 43 is made of a durable material with certain flexibility for enabling ease release of the cover 40. The hinge assembly 42 and the latch 43 are firmly attached to the housing 2 with known means depending on the material the housing 2 is made of, for example with screws, rivets, glue, or other means that are most suitable.

For the magnetic connection at least one magnet 44 is integrated into the cover 40 (along its edge on the inner surface - not shown on Figures) and into the housing 2 (into the corresponding part of the rim of the housing 2), wherein the magnets 44 are of the opposite magnetic poles or alternatively, a ferromagnetic material is integrated into the housing 2 in the corresponding parts. The magnets 44 and/or the latch 43 hold the cover 40 when it is in closed position and prevent any unintentional motion or opening of the cover 40 during the CCM device 1 operation.

In one embodiment the holding of the cover 40 in place when in an opened position is achieved by a magnetic connection. At least one magnet 45 is integrated into the opaque outer surface of the cover 40 and into corresponding part of the surface of the hinge assembly 42, wherein the magnets 45 are of the opposite magnetic poles or alternatively, a ferromagnetic material is integrated into the surface of the hinge assembly 42 in the corresponding parts. The magnetic force holds the cover 40 when it is in fully opened position and prevent any unintentional motion of cover 40 during the CCM device 1 operation.

Using the cover 40, the CCM device 1 is easily adapted to work in spoof or jam mode. Jamming objective is to flood the MLWDS 11 with excessive UVC photon flux thus forcing it into saturation. While the MLWDS 11 is saturated it is not possible to detect the emitted UVC photons, neither the real missile 21 if it is fired within the predetermined time frame. Jamming is usually effective while the MLWDS 11 is in saturation, and the predetermined time frame depends on the sensor type of the MLWDS 11 (e.g., photomultiplier tube, image semiconductor sensor), but up to ten seconds can be expected. In jamming mode, the complete UVC LED source is opened (the cover 40 is fully opened) and driving the UVC LED source such to achieve maximum possible intensity and radiance.

User can apply both modes selectively during operation. While the target is at longer distances only spoofing is desirable with opened or partially covered UVC LED source. While the target approaches, user can fully open UVC LED source thus operating in jamming mode.

The use of a cover 40 with integrated opening 41 has several advantages. The implementation of the CCM device 1 is simpler and cheaper, as less electronics are required. The CCM device 1 is more robust and thus more resistant for field operation in harsh environments. The switching between spoof or jam mode is simpler. Less emission profiles or only one emission profile can be used for spoof or jam mode. The cover 40 also protects the UV transparent glass cover. This is very important in tactical operation on the field since the cover 40 is resistant to braking.

Optionally, status indicators 51 are integrated on the back side of the housing 2. Status indicators 51 are preferably LED type in visual spectrum, with single or multiple colors, to be clearly seen by human operator. They indicate operational status of CCM device 1. At least one indicator is present, to show the operation of UVC light source (ON/OFF). Another indicator or multiple indicators can show the status of battery, its state of charge, either as OK/LOW or in multiple stages, e.g., with three indicators in ON/OFF to indicate charge levels, e.g., 0-30 %, 31-60 %, 61-100 %.

CCM device 1 can operate, emit UVC light, during day and night. While UVC light is not visible, neither during night operation this prevents the human operating the device to be seen directly from aircraft when it flies low. To maintain the stealthy operation also during night it is desirable that the status light intensity is reduced.

A sliding latch assembly 50 with openings is designed to achieve the purpose. It is operated manually by human operator of the CCM device. The sliding latch assembly 50 is made of suitable material, e.g., ABS, that provides friction so that the sliding latch stays in the position after sliding. A single stroke, push downwards of the sliding latch achieves these effects on the status lights intensity:
- Fully exposed, fully visible, full light intensity emitted.
- Partially exposed, partially visible, partial light intensity emitted.
- Fully closed, not visible, no light emitted.

In one embodiment, the CCM device 1 additionally comprises a mechanical or optical sight 8 installed on top or side position of the housing 2, such that a soldier can observe and aim towards the aircraft 10, i.e., the target. Additional optical zoom, optical magnification can be included, as well as a night vision or IR vision sight or optical scope.

In one embodiment, CCM device 1 additionally comprises an attachment harness 9 installed on the housing 2 for attachment of the device onto the anti-aircraft weapon systems 20, i.e., on their weapons or launching tubes. Preferably, the attachment harness 9 is standardized rail, e.g., Picatinny or clamp to facilitate straightforward attachment.

Suitable anti-aircraft weapon systems 20 with embedded weapon electronic circuit 20a are for example MANPADS (Man-portable Air-Defense System), VSHORAD (Very Short Range Air Defense), SHORAD (Short Range Air Defense) based on anti-aircraft surface-to-air or ship-to-air missiles or high rate of fire anti-aircraft guns, remote controlled unmanned ground or aerial vehicles or surface and ship vehicles (UGV, UAV, drones in general) equipped with anti-aircraft missiles 21, or remote weapon stations (RWS) equipped with anti-aircraft missiles 21 and installed on 4x4, 6x6, 8x8 or special purpose military vehicle or on ships and drones.

In one embodiment, the anti-aircraft weapon system 20 may comprise also a weapon connection means 7a configured for connecting the weapon electronic circuit 20a with the electronic control circuit 4 on the CCM device 1.

The CCM device 1 is suitable for rapid successive activation, triggering of the UVC LED source. There is no practical operational limit to minimum activation time, called rate of fire since there are no cooling problems due to the use of UVC LED source. Successive activation is determined by the profile length. For very short profiles, e.g., 3 s, the CCM device 1 can achieve sustained rate of fire up to 20 per min, for medium length profiles, e.g., 6 s, the rate of fire can be 10 per min.

In one embodiment, which is the preferred one, the CCM device 1 has only non-coherent wavelength sources - UVC LEDs integrated in the UVC LED source emitting light of 1) single wavelength, 2) two wavelengths, 3) three wavelengths, 4) four wavelengths. It is preferable that wavelengths from all UVC LEDs cover different spectrum bands.

In another embodiment, the CCM device 1 may have a combination of coherent and non-coherent wavelength sources integrated within the same frame: one coherent wavelength and one non-coherent wavelength. It is preferable that wavelengths from both sources cover different spectrum bands. Typical example includes coherent wavelength generated by laser at 266 nm and non-coherent wavelength generated by UVC LED at 278 nm.

In yet another embodiment, the CCM device 1 may have a combination of coherent and multiple non-coherent wavelength sources within the same frame: one coherent wavelength and two, three of four non-coherent wavelength sources. It is preferable that wavelengths from all sources cover different spectrum bands. Typical examples include coherent wavelength generated by laser at 266 nm and first non-coherent wavelength generated by UVC LED at 278 nm, second non-coherent wavelength generated by UVC LED at 275 nm, third non-coherent wavelength generated by UVC LED at 272 nm, fourth non-coherent wavelength generated by UVC LED at 265 nm.

Use of multiple wavelengths accomplishes several purposes: 1) compensation and equalization of atmospheric attenuation which is a function of wavelength, 2) providing more or less atmospheric attenuation of emitted profile depending on wavelength, 3) spoofing mechanism, 4) increasing probability of detection by MLWS when they employ wavelength filters (or optical filters) to selectively sense only a narrow spectral band.

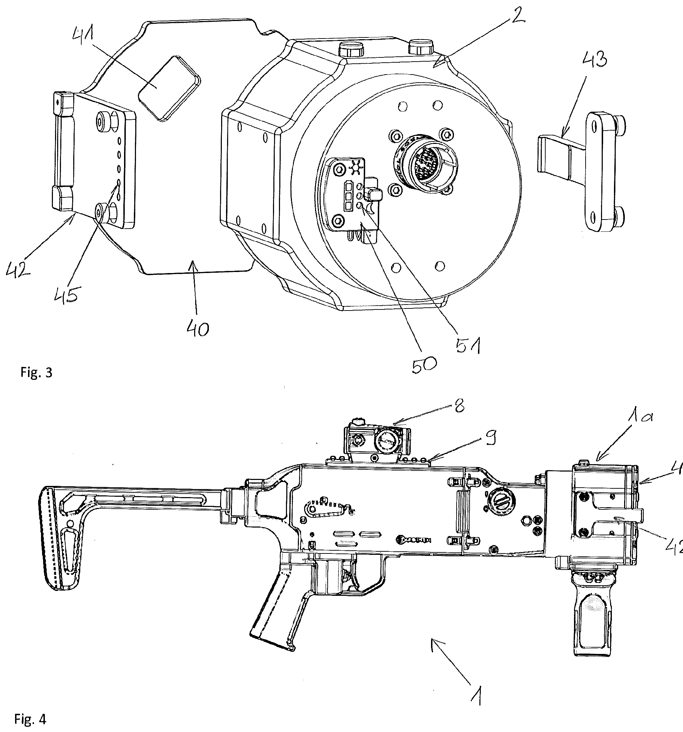

In one embodiment, the CCM device 1 is implemented as a hand-held standalone and self-contained device, that performs the required function, i.e., emitting UVC wavelength, including the spoofing and jamming function, as presented on Fig. 4. In this case the CCM device 1 is implemented with ergonomic means for enabling the user to aim and use the device, said ergonomic means comprising at least a folding stock and one hand grip. Optionally, a mechanical or optical sight 8 is installed on top position of the housing 2.

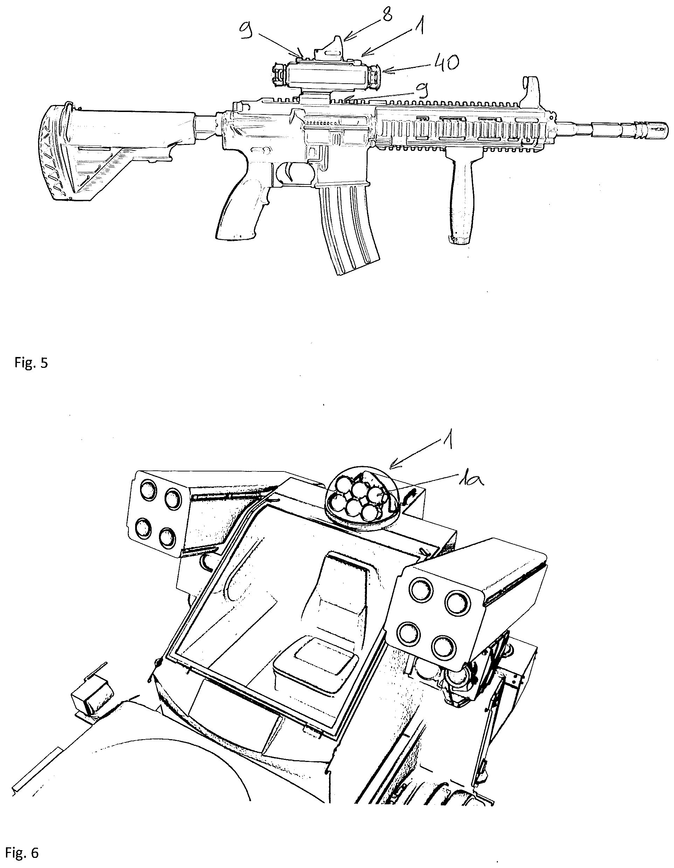

In another embodiment, the CCM device 1 is implemented as an attachment module to the existing small arms. In this case the CCM device 1 is attached to the existing small arms via the attachment harness 9, as presented on Fig. 5. The triggering means of the triggering unit 5 are integrated with the trigger of the small arms or they have separate triggering means, wherein the trigger is preferably electronically connected to the electronic part of the trigger unit 5.

The purpose of said devices is to distribute them to infantry in larger quantities and thus cover the wide area with UVC missile spoofing devices. This greatly enhances the probability of aircraft receiving the spoofed missile alarm. Particularly during night missions, this is an advantage, since triggering CCM device is silent, not visible in visual or IR spectrum and not detectable by other means, except by missile detection on aircraft.

When the CCM device 1 is implemented as a standalone device, it can be mounted on a tripod or a similar support structure and can be tilted and rotated to cover wide range of elevation (pitch) and azimuth (yaw). When the CCM device 1 is implemented as a device mounted on remote controlled unmanned ground or arial vehicles including drones or any type of wheeled or tracked vehicle or on and/or integrated into remote controlled weapon station it is designed so that can be tilted and rotated to cover wide range of elevation (pitch) and azimuth (yaw) independent of the UAV or UGV or drone or vehicle or remote-controlled weapon station direction of motion.

When the CCM device 1 is part of the MANPADS (Man-portable Air-Defense System), preferably the device is attached to the MANPADS, so that after the anti-aircraft missile is launched, the CCM device can be disconnected or disengaged for further use with another MANPADS missile launcher. When the CCM device 1 is part of other anti-aircraft weapon systems 20 as listed above, the device may be attached or integrated (built-in) to the anti-aircraft weapon systems 20, wherein integration should be done so that if for example a protection cover is used it should be for maximum efficiency essentially transparent to the emitted EM wavelength.

One of the advantages of integration of the CCM device 1 on the remote-controlled weapon station (RWS) is a more reliable assessment if all countermeasures 12 have already been released. Namely, RWS have multiple higher resolution cameras and capable optics operating in visual and IR spectrum and thus the number of already released countermeasures 12 can be assessed much more accurately.

Namely, it is usually difficult to determine exactly how many flares 12 have already been released and whether the majority or all flares 12 have been released. This information is very important in combat, as it can happen that if the aircraft 10 has not yet released all the flares 12, the real anti-aircraft missile 21 may miss the target, because the remaining flares 12 could successfully interfere with the real missile 21. Since flares 12 are usually released in bursts, this can be avoided by triggering the CCM device 1 until it is detected that the aircraft 10 is no longer releasing flares 12 or is releasing them in sporadic smaller bursts (e.g., only 2 vs 8 per side), and only then the real missile 21 is launched to increase the probability of target hit.

In yet another embodiment, a CCM device 1 is implemented with multiple CCM modules 1a connected to the same trigger unit 5. In this case the CCM device 1 performs the same function, albeit with increased output power, i.e., higher output UVC intensity, amplitude, or irradiance. Such larger CCM devices 1 are fitted on larger systems, e.g., vehicles, military vehicles, ships, remote weapon stations (RWS) or are installed as standalone units on e.g., tripod. The net result is the longer maximum distance to target successful operation for spoofing mode (e.g., 5 km vs 4 km). Another net result is the longer maximum distance to target successful operation for jamming mode (e.g., 2 km vs 1,5 km). When operating on vehicle or RWS the CCM device 1, i.e., each of the CCM modules 1a, can be oriented towards the target co-axially with weapon systems on the vehicle, e.g., pointing in the same direction as gun on the vehicle or RWS; or can be oriented in different directions as guns. When the CCM device 1 is oriented co-axially with the gun by emitting UVC missile profile, the aircraft reveals itself by flare ejection and consequently the aircraft is targeted with a real missile or a gun fire when it is within the suitable distance to the vehicle or RWS. Thus, the target hit probability is increased. When CCM device 1 is pointing into different direction it functions as preparation to combat with spoofing the next incoming aircraft, while the closer aircraft is being hit by real weapons from the same vehicle or RWS.

In one embodiment said CCM device may be part of the air defense system, wherein the air defense system is comprised of:
- at least one CCM device 1 as defined above
- and at least one anti-aircraft weapon system 20 configured for launching at least one anti-aircraft missile 21, wherein triggering profiles of simulated missiles (3b) or jamming mode, and launching of anti-aircraft missiles 21 are coordinated.

In one embodiment, the air defense system can include a sensor subsystem 30 for detecting and acquiring information about the aircraft 10, for example the aircraft 10 distance, elevation, azimuth, velocity, aircraft 10 type (e.g., helicopter, jet) and model (e.g., MIL-17, F-16).

In one embodiment, said sensor subsystem 30 is also configured for detecting, analyzing, and recording or counting the ejected flares 12, and thus for providing feedback on performance, and optionally for providing information when to launch the real missiles 21.

In one embodiment, said sensor subsystem 30 is also configured for sensing of IR lasers emitted from directional infrared countermeasures systems on the aircraft 10.

In this way the decision-making process when to trigger the anti-aircraft missile 21 is significantly enhanced, since for example based on known aircraft 10 model and type, particular aircraft countermeasures 12 are determined, and appropriate profiles and sequence of simulated missiles 3b is selected in combination with the anti-aircraft missile 21. For example, based on known aircraft 10 model, the types and number of flares 12 are determined, thereby a more accurate prediction weather all flares 12 are already exhausted is enabled.

The sensor subsystem 30 is comprised of sensors, such as for example VIS, IR camera, radar, and of an integrated computer with connectivity capabilities for connection with the electronic control circuit 4 through the connection means 7. The electronic control circuit 4 and/or integrated computer is configured for extracting relevant information from the sensor data such as distance, elevation, azimuth, velocity, the aircraft type, and model.

Preferably, the sensor subsystem 30 is located on the CCM device 1.

During operation the CCM device 1 may be located essentially on the same geographical location as the anti-aircraft weapon system 20, for example the CCM device 1 is attached to or is integrated into the anti-aircraft weapon system 20, or the CCM device 1 is on different geographical location. In an embodiment when the CCM device 1 is on different geographical location, and since during operation, the CCM device 1 does not emit visible traces, like rocket motor fumes or trails that could be visually detected from the remote aircraft 10, the probability of disabling the CCM device 1 is reduced or prevented. On the other hand, the location of the anti-aircraft weapon systems 20 can be detected from the remote aircraft 10 and consequently the possibility of remote targeting and incapacitation / disabling of the collocated CCM device 1, is thus increased.

Triggering sequence of the CCM device 1 and of the anti-aircraft weapon system 20 can be done manually, or the triggering sequence thereof is controlled by a synchronization software module, or a combination thereof. Synchronization software module runs on the electronic control circuit 4 of the CCM device 1 or on an additional electronic circuit with processing, memory storage and communication possibilities, which is through the connection means 7, 7a connected to the electronic control circuit 4 and/or to the weapon electronic circuit 20a.

In embodiments where the air defense system comprises more than one CCM device 1, and the air defense system, i.e., the triggering sequence, is controlled by the synchronization software module, one of the CCM devices 1 and its electronic control circuit 4 is selected as a central electronic control circuit 4 on which the synchronization module is running and other electronic control circuits 4 are connected through the connection means 7 to the central electronic control circuit 4.

When triggering sequence of the CCM device 1 and of the anti-aircraft weapon system 20 is controlled by the synchronization software module the triggering may be based on sensor data mentioned above, for example counting of already released countermeasures 12, and/or combination thereof, received from the sensor subsystem 30.

The synchronization software module, according to preprogrammed algorithm, may have different threshold functions based on said parameters, that are either countable or probability based, e.g., if the counted number of flares is over the predefined threshold (e.g. 8 flares have been ejected) or that the probability is over predefined threshold (e.g. 70% that all flares have been ejected), in order to decide whether or not all flares have been released. Furthermore, threshold functions may change during operation of the CCM device 1, automatically or manually.

If a CCM device 1 operator is located on a different geographical location, the triggering of the CCM device 1 is done remotely via known technologies, such as wired e.g., copper or fiber, or wireless link, e.g., WiFi, LoRa, specific military link, directional microwave link or laser-based communication link. Remote operation is preferred when the CCM device is mounted on UAV or UGV or drone or tripod or RWS.

The CCM device 1 is used in combat, i.e., during anti-aircraft missions / engagements. The operating range of the CCM device 1 and thus of the air defense system using said CCM device 1 is up to 5 km, thus the present invention is therefore particularly suitable for low-flying aircrafts flying at altitudes up to 5 km and for helicopters.

In one embodiment an anti - aircraft combat method which is using the air defense system with the CCM device 1 as disclosed comprises the following steps:
- step A: triggering profiles of simulated missiles 3b or a sequence thereof or jamming mode in a direction, frontally, sideways or at the rear of an aircraft 10 once the aircraft 10 is within an operating range of the CCM device 1;
- step B: locking an anti-aircraft missile 21 onto the aircraft 10, i.e., the target, and launching the anti-aircraft missile 21 towards the aircraft 10.

Steps A and B are executed sequentially or partly or entirely simultaneously.

In one embodiment the method can include additional steps. Prior to triggering profiles of simulated missiles 3b or a sequence thereof or jamming mode, an additional step of detecting and assessing information on the aircraft 10 by a sensor subsystem 30 may be done.

When it is determined that the countermeasures 12 are implemented as flares, prior to launching the anti-aircraft missile 21 towards the aircraft 10 an additional step of detecting if the aircraft 10 has released all countermeasures 12, i.e., the flares, by a sensor subsystem 30, thus providing feedback, and optionally providing information if or when to launch the real missiles 21.

When it is determined that the countermeasures 12 are implemented as directional infrared countermeasures, steps A and B are executed partly or entirely simultaneously.

Since the battlefield is usually of a larger geographical area, preferably several CCM devices 1 are placed and dispersed over said geographical area.

In a preferred embodiment, the CCM device 1 is located on a different location as the existing anti-aircraft weapon system 20 to avoid detection by the aircraft 10 more successfully.

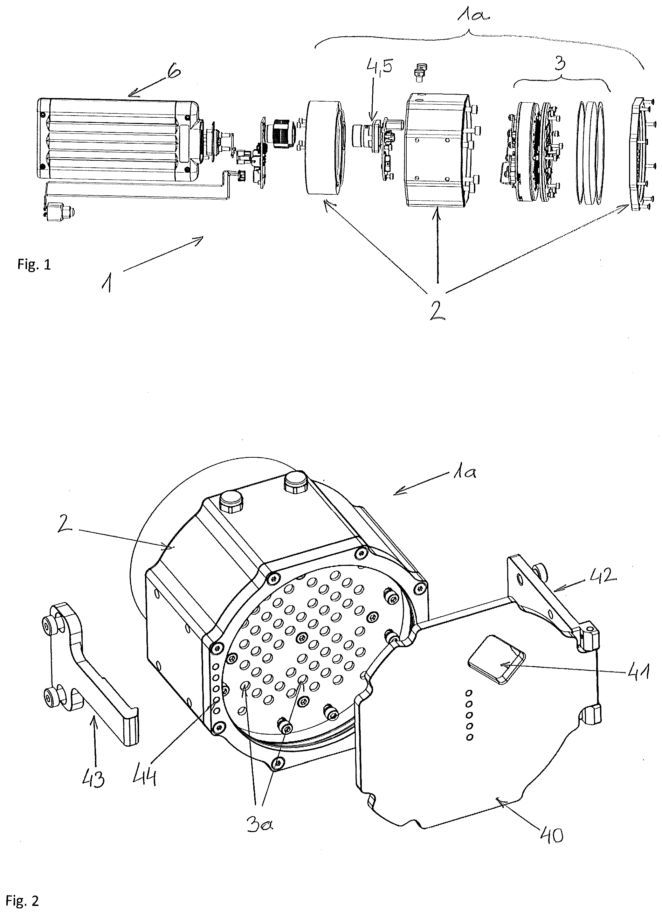

One of the possible scenarios where the air defense system and method is used where a MANPADS gunner and a CCM device operator act in unison targeting a single aircraft is presented on Fig. 1 and described below.
1. At least one soldier, i.e. a gunner is equipped with a MANPADS missile launcher 20. Usually, two soldiers act in unison targeting a single aircraft.
2. At least one device operator equipped with a man portable CCM device 1 is present on the battlefield at different location than the gunner with the MANPADS missile launcher 20. Preferably there are several device operators each equipped with the CCM device 1, suitably placed over larger geographical area where the aircrafts 10 are expected to come, cross, or operate.
3. The MANPADS gunner and the CCM device 1 operator acquire information on incoming aircraft 10 from radar operators, forward observers or they spot it themselves.
4. The MANPADS 20 gunner and the CCM device 1 operator coordinate their actions, with voice communication preferably with voice communication over a wireless communication network.
5. After the aircraft 10 is spotted by the device operator, he assesses the aircraft distance.
6. The MANPADS gunner also spots the aircraft 10 and aims with MANPADS 20 in ready to shoot position.
7. When the distance of the aircraft 10 is within the operating range of the CCM device 1 (e.g. 5 km), the device operator manually, through the trigger unit 5, selects the profile of the fake missiles 3b and presses the trigger on the CCM device 1.
8. The EM sensor unit 3 emits EM radiation as if an anti-aircraft missile 21 was launched.
9. The MLWDS 11 onboard the aircraft 10 detects the emitted EM radiation and interprets it as a launched or in-flight anti-aircraft missile 21.
10. The pilot of the aircraft 10, or preset automatic control decides to release the flare countermeasures 12.
11. The device operator and the MANPADS gunner observe the flare 12 release from the aircraft 10.
12. The device operator may again press the trigger 5 on the CCM device 1 to further emit EM radiation as if another anti-aircraft missile 21 was launched or is in flight.
13. The steps 5. - 12. may be repeated several times.
14. The device operator or the MANPADS gunner assesses if the aircraft 10 has released or even exhausted all flares 12.
15. The MANPADS gunner activates the MANPADS missile 21. Alternatively, this step can already be performed after first flares 12 release. This depends on tactical situation (e.g. aircraft speed, missile 21 setup time).
16. The MANPADS gunner aims at the aircraft 10 and assures that the missile 21 is locked onto the target, i.e. the aircraft 10.
17. The MANPADS gunner triggers the anti-aircraft missile 21 launch.
18. The anti-aircraft missile 21 is ejected from the launch tube and heads towards the aircraft 10.
19. The aircraft 10 is hit by the missile 21.

One of the possible scenarios where the air defense system and method is used in automatic manner is presented on Fig. 2 and described below.
1. At least one (V)SHORAD missile launcher 20 with a single or multiple anti-aircraft missiles 21 and with an embedded weapon electronic circuit 20a which is through a connection means 7, 7a connected to the electronic control circuit 4 of the CCM device 1 is placed on a mobile platform (usually 4x4 or 6x6).
2. At least one CCM device 1 is present on the battlefield at different location than the missile launcher 20. Preferably there are many such CCM devices 1, suitably placed over larger geographical area where the aircrafts 10 are expected to come, cross, or operate, wherein electronic control circuit 4 of one CCM device 1 is selected as a central electronic control circuit 4 on which the synchronization software module is running and other electronic control circuits 4 are connected through the connection means 7 to the central electronic control circuit 4.
3. Information on incoming aircraft 10 is acquired by a sensor subsystem 30 comprising IR camera wherein said sensor subsystem 30 is located on the CCM device 1. For example, the following information is extracted: the aircraft distance, velocity, direction, and estimated trajectory. Optionally, the aircraft type and model are assessed.
4. When the distance of the aircraft 10 is within the operating range of the CCM device 1 (e.g. 5 km), the synchronization software module which runs on the electronic control circuit 4 triggers the CCM device 1.
5. The EM sensor unit 3 emits EM radiation as if an anti-aircraft missile 21 was launched.
6. The MLWDS 11 onboard the aircraft 10 detects the emitted EM radiation and interprets it as a launched or in flight anti-aircraft missile 21.
7. The pilot of the aircraft 10 or preset automatic countermeasures control decides to release the flare countermeasures 12.
8. Detection of the flare 12 release and counting of the ejected flares 12 is done by the sensor subsystem 30 located on CCM device 1 and is communicated to the synchronization software module.
9. Possible further triggering of the CCM device 1 is done by the synchronization software. Decision on further triggering is based for example on the number of detected flares 12 from all previous ejections from the same aircraft 10 and on the type and model of the aircraft 10.
10. The steps 4. - 9. may be repeated several times.
11. The synchronization software module according to the preprogrammed algorithm assesses whether the aircraft 10 has released or even exhausted all flares 12.
12. When the synchronization software module assesses that all flares 12 have been released, the corresponding trigger activation signal is communicated to the (V)SHORAD missile launch system 20. If the anti-aircraft missile 21 is already locked onto the aircraft 10, the trigger activation signal triggers the launching of the missile 21. If the anti-aircraft missile 21 is not locked onto the aircraft 10, trigger activation signal triggers locking and subsequent launching of the missile 21 is activated automatically by locking the anti-aircraft missile 21 onto the aircraft 10, i.e. the target, and launching the anti-aircraft missile 21 towards the aircraft 10.
13. One or several missiles 21 are launched from launch tubes and headed toward the aircraft 10.
14. The aircraft 10 is hit by the missile 21.

On Fig. 4 a flowchart of one the possible air defense system operation and method is presented.
1. SETUP - presence of at least one CCM device 1 and the (V)SHORAD system 20.
2. ESTABLISH - the communication link between the CCM device 1 and the (V)SHORAD system 20, and between the CCM device 1 and the control center is established.
3. The CCM device 1 is operated remotely or autonomously.
4. MISSION ACTIVITY - detection and classification of the target (i.e., information about the aircraft 10).
5. EM WAVE EMISSION - based on acquired information, triggering of the CCM device 1, and emitting the corresponding profile(s) of the simulated missiles 3b.
6. OBSERVATION - detection of the flare 12 release and counting of the ejected flares 12.
7. Steps 5 and 6 may be repeated, usually until all flares 12 have been ejected.
8. (V)SHORAD LAUNCH DECISION - signaling to (V)SHORAD system 20 to launch.
9. (V)SHORAD MISSILE LAUNCH - launching of the anti-aircraft missile 21.

Step 2 is optional in cases that CCM device operating team is working independently of anti-aircraft team. In such case, CCM device team can start operating the CCM device when aircraft is detected or seen by a human operator. While the anti-aircraft team will detect flares ejection and will operate the (V)SHORAD system accordingly to the defense protocol.

## Claims

1. A counter countermeasures device - CCM device (1) for use in an anti - aircraft combat, wherein said CCM device (1) is configured for generating and emitting electromagnetic radiation of wavelengths, which are detected by an anti-aircraft missile warning and detection system (11) installed on an aircraft (10), wherein said CCM device (1) is comprised of a CCM module (1a), a trigger unit (5) and a power unit (6), wherein said CCM module (1a) is comprised of an electromagnetic source unit (3), comprising multiple EM sources (3a) emitting EM radiation, an electronic control circuit (4) with processing, memory, and EM source unit (3) driving capabilities, **characterized in that** the CCM device (1) further comprises a cover (40) removably attachable to the CCM module (1a) on its front end, wherein said cover (40) is opaque to the emitted radiation and has at least one opening (41) transparent to the emitted radiation, through which only a part of the EM radiation is emitted when the cover (40) is in a closed position, for enabling operating of said CCM device (1) in spoof and jam mode and switching between both modes by selecting either closed position or opened position of the cover (40).

2. The CCM device (1) according to claim 1, wherein the EM source unit (3) is configured for emitting non-coherent UV light in solar blind region and the EM source unit (3) is implemented as an array of individual EM sources (3a) implemented as UVC LEDs emitting light of the same wavelength or emitting light of different wavelengths, thereby defining at least one profile of a simulated missile (3b) or of a jamming mode.

3. The CCM device (1) according to claim 1, wherein the trigger unit (5) is configured for selecting the profile or a sequence thereof, and for activating the CCM device (1), including triggering the simulated missiles (3b) or jamming mode.

4. The CCM device (1) according to claim 1, wherein the electronic control circuit (4) is configured for driving the EM source unit (3), for storing the profiles and sequences thereof in a memory, for receiving an input from the trigger unit (5) and for running the counter countermeasures software module which operates the counter countermeasures device (1).

5. The CCM device (1) according to claim 1, wherein the cover (40) is attached to the CCM module (1a) via a hinge assembly (42) and is held in place when in a closed position or in an opened position by a mechanical connection or by a magnetic connection or by combination of both.

6. The CCM device (1) according to claim 1, wherein the CCM device (1) additionally comprises a mechanical or optical sight (8) installed on top or side position of a housing (2) into which the CCM module (1a) is installed.

7. The CCM device (1) according to claim 1, wherein the CCM device (1) additionally comprises an attachment harness (9) for attachment of the device (1) onto anti-aircraft weapon systems (20).

8. The CCM device (1) according to claim 1, wherein the CCM device (1) is implemented as a hand-held standalone and self-contained device, that performs the required function, emitting UVC wavelength, including the spoofing and jamming function, wherein the CCM device (1) is implemented with ergonomic means for enabling the user to aim and use the device.

9. The CCM device (1) according to claim 1, wherein the CCM device (1) is implemented as an attachment module to the existing small arms and is attached to the existing small arms via the attachment harness (9), wherein the triggering means of the triggering unit (5) are integrated with the trigger of the small arms or have separate triggering means.

10. The CCM device (1) according to claim 1, wherein CCM device (1) is implemented with multiple CCM modules (1a) connected to the same trigger unit (5).

11. An air defense system wherein said air defense system is comprised of:
- at least one CCM device (1) according to claims 1 to 10
- and at least one anti-aircraft weapon system (20) configured for launching at least one anti-aircraft missile (21), wherein triggering profiles of simulated missiles (3b) or jamming mode, and launching of anti-aircraft missiles (21) are coordinated.

12. The air defense system according to claim 11, wherein the anti-aircraft weapon system (20) additionally comprises a weapon connection means (7a) configured for connecting a weapon electronic circuit (20a) with the electronic control circuit (4) on the CCM device (1).

13. The air defense system according to claims 11 and 12, wherein the air defense system additionally includes a sensor subsystem (30) configured for detecting and acquiring information about the aircraft (10), and/or for detecting, analyzing, and recording or counting ejected flares (12), and/or for sensing of IR lasers emitted from directional infrared countermeasures systems on the aircraft (10).

14. The air defense system according to claim 13, wherein the sensor subsystem (30) is located on the CCM device (1).

15. The air defense system according to claims 11 to 14, wherein the CCM device (1) is located essentially on the same geographical location as the anti-aircraft weapon system (20), or the CCM device (1) is located on different geographical location.

16. The air defense system according to claims 11 to 15, wherein a triggering sequence of the CCM device (1) and of the anti-aircraft weapon system (20) is done manually, or when the CCM device (1) is located on different geographical location as the anti-aircraft weapon system (20), the triggering of the CCM device (1) and of the anti-aircraft weapon system (20) is done remotely via known technologies, such as wired for example copper or fiber, or wireless link, such as WiFi, LoRa, specific military link, directional microwave link or laser based communication link.

17. The air defense system according to claims 11 to 16, wherein the triggering sequence of the CCM device (1) and of the anti-aircraft weapon system (20) is controlled by a synchronization software module, wherein said synchronization software module runs on the electronic control circuit (4) of the CCM device (1) or on an additional electronic circuit with processing, memory storage and communication possibilities, wherein the additional electronic circuit is through the connection means (7, 7a) connected to the electronic control circuit (4) and/or to the weapon electronic circuit (20a).

18. The air defense system according to claims 11 to 17, wherein air defense system is comprised of:
- at least one CCM device (1) according to claims 1 to 10, and with the sensor subsystem (30) located on the CCM device (1), wherein said sensor subsystem (30) is configured for detecting and acquiring information about the aircraft (10) before generating and emitting profiles of simulated missiles (3b) or jamming mode
- and at least one anti-aircraft weapon system (20) configured for launching at least one anti-aircraft missile (21), wherein triggering profiles of simulated missiles (3b) or jamming mode, and launching of anti-aircraft missiles (21) are coordinated.

19. An anti - aircraft combat method comprising the air defense system according to claims 11 to 17, wherein the method comprises:
- step A: triggering profiles of simulated missiles (3b) or a sequence thereof or jamming mode in a direction, frontally, sideways or at the rear of an aircraft (10) once the aircraft (10) is within an operating range of the CCM device (1);
- step B: locking an anti-aircraft missile (21) onto the aircraft (10) and launching the anti-aircraft missile (21) towards the aircraft (10).

20. The anti - aircraft combat method according to claim 18, wherein the method further includes a step of detecting and assessing information about the aircraft (10) by a sensor subsystem (30), wherein said step is performed prior to step A.

21. The anti - aircraft combat method according to claims 18 and 19, wherein step B follows step A.

22. The anti - aircraft combat method according to claims 18 and 19, wherein step A and step B are partly or entirely simultaneous.

23. The anti - aircraft combat method according to claim 19, wherein the method further includes a step of detecting if the aircraft (10) has released countermeasures (12) by a sensor subsystem (30), wherein said step is executed prior to step B.

## Patentansprüche

1. Gegen-Gegenmaßnahmenvorrichtung - CCM-Vorrichtung (1) zur Verwendung in einem Flugabwehrkampf, wobei die CCM-Vorrichtung (1) zur Erzeugung und das Ausstrahlen elektromagnetischer Strahlung von Wellenlängen eingerichtet ist, die von einem an einem Flugzeug (10) installierten Raketenannäherungswarnsystem (11) detektiert werden, wobei die CCM-Vorrichtung (1) aus einem CCM-Modul (1a), einer Auslöseeinheit (5) und einer Leistungseinheit (6) besteht, wobei das CCM-Modul (1a) aus einer elektromagnetischen Quelleneinheit (3) besteht, die mehrere die EM-Strahlung ausstrahlende EM-Quellen (3a), eine elektronische Steuerschaltung (4) mit Verarbeitungs-, Speicher- und EM-Quelleinheit (3)-Ansteuerungsfähigkeiten umfasst, **dadurch gekennzeichnet, dass** die CCM-Vorrichtung (1) ferner eine Abdeckung (40) umfasst, die lösbar an dem CCM-Modul (1a) an seinem vorderen Ende anbringbar ist, wobei die Abdeckung (40) für die ausgestrahlte Strahlung undurchlässig ist und mindestens eine Öffnung (41) aufweist, die für die ausgestrahlte Strahlung transparent ist, durch die nur ein Teil der EM-Strahlung freigegeben wird, wenn sich die Abdeckung (40) in einer geschlossenen Position befindet, um das Betreiben der CCM-Vorrichtung (1) im Täusch- und Störmodus zu ermöglichen und zwischen beiden Modi umzuschalten, indem entweder die geschlossene Position oder die geöffnete Position der Abdeckung (40) ausgewählt wird.

2. CCM-Vorrichtung (1) nach Anspruch 1, wobei die EM-Quelleneinheit (3) zum Ausstrahlen von nicht kohärentem UV-Licht im Sonnen-Blindbereich ausgelegt ist und die EM-Quelleneinheit (3) als eine Anordnung von individuellen EM-Quellen (3a) ausgeführt ist, die als UVC-LEDs ausgeführt sind, die Licht derselben Wellenlänge ausstrahlen oder Licht unterschiedlicher Wellenlängen ausstrahlen, wodurch mindestens ein Profil einer simulierten Rakete (3b) oder eines Störmodus definiert wird.

3. CCM-Vorrichtung (1) nach Anspruch 1, wobei die Auslöseeinheit (5) dazu ausgelegt ist, das Profil oder eine Sequenz davon auszuwählen und die CCM-Vorrichtung (1) zu aktivieren, einschließlich des Auslösens der simulierten Raketen (3b) oder des Störmodus.

4. CCM-Vorrichtung (1) nach Anspruch 1, wobei die elektronische Steuerschaltung (4) zum Ansteuern der EM-Quelleinheit (3), zum Speichern der Profile oder Sequenzen davon in einem Speicher, zum Empfangen einer Eingabe von der Auslöseeinheit (5) und zum Ausführen des Gegen-Gegenmaßnahmen-Softwaremoduls, das die Gegen-Gegenmaßnahmenvorrichtung (1) betreibt, ausgelegt ist.

5. CCM-Vorrichtung (1) nach Anspruch 1, wobei die Abdeckung (40) über eine Scharnieranordnung (42) an dem CCM-Modul (1a) befestigt ist und in einer geschlossenen Position oder in einer geöffneten Position durch eine mechanische Verbindung oder durch eine magnetische Verbindung oder durch eine Kombination von beiden an Ort und Stelle gehalten wird.

6. CCM-Vorrichtung (1) nach Anspruch 1, wobei die CCM-Vorrichtung (1) zusätzlich ein mechanisches oder optisches Visier (8) umfasst, das auf einer oberen oder seitlichen Position eines Gehäuses (2) angebracht ist, in dem der CCM-Modul (1a) aufgenommen ist.

7. CCM-Vorrichtung (1) nach Anspruch 1, wobei die CCM-Vorrichtung (1) zusätzlich einen Befestigungsgurt (9) zur Befestigung der Vorrichtung (1) an den Flugabwehr-Waffensystemen (20) umfasst.

8. CCM-Vorrichtung (1) nach Anspruch 1, wobei die CCM-Vorrichtung (1) als eine in der Hand gehaltene eigenständige und in sich geschlossene Vorrichtung ausgebildet ist, die erforderliche Funktion erfüllt, UVC-Wellenlänge ausstrahlt, einschließlich der Täusch- und Störfunktion, wobei die CCM-Vorrichtung (1) mit ergonomischen Mitteln ausgebildet ist, um es dem Benutzer zu ermöglichen, die Vorrichtung zu verwenden und damit zu zielen.

9. CCM-Vorrichtung (1) nach Anspruch 1, wobei die CCM-Vorrichtung (1) als Befestigungsmodul an der vorhandenen Handfeuerwaffe ausgebildet ist und über den Befestigungsgurt (9) an der vorhandenen Handfeuerwaffe befestigt ist, wobei die Auslösemittel der Auslöseeinheit (5) mit dem Auslöser der Handfeuerwaffe integriert sind oder separate Auslösemittel aufweisen.

10. CCM-Vorrichtung (1) nach Anspruch 1, wobei die CCM-Vorrichtung (1) mit mehreren CCM-Modulen (1a) ausgeführt ist, die mit derselben Auslöseeinheit (5) verbunden sind.

11. Luftverteidigungssystem, wobei das genannte Luftverteidigungssystem folgendes umfasst:
- mindestens eine CCM-Vorrichtung (1) nach Ansprüchen 1 bis 10
- und mindestens ein Flugabwehr-Waffensystem (20), das zum Abschießen mindestens einer Flugabwehrrakete (21) ausgebildet ist, wobei das Auslösen von Profilen von simulierten Raketen (3b) oder dem Störmodus und das Abschießen von Flugabwehrraketen (21) koordiniert sind.

12. Luftverteidigungssystem nach Anspruch 11, wobei das Flugabwehr-Waffensystem (20) zusätzlich ein Waffenverbindungsmittel (7a) umfasst, das zum Verbinden der Waffenelektronikschaltung (20a) mit der elektronischen Steuerschaltung (4) an der CCM-Vorrichtung (1) ausgebildet ist.

13. Luftverteidigungssystem nach Ansprüchen 11 und 12, wobei das Luftverteidigungssystem zusätzlich ein Sensor-Teilsystem (30) umfasst, das zum Erfassen und Sammeln von Informationen über das Luftfahrzeug (10) und/oder zum Erfassen, Analysieren und Aufzeichnen oder Zählen von ausgestoßenen Täuschkörpern (12) und/oder zum Erfassen von aus gerichteten Infrarot-Gegenmaßnahmensystemen an dem Luftfahrzeug (10) ausgestrahlten IR-Lasern ausgebildet ist.

14. Luftverteidigungssystem nach Anspruch 13, wobei das Sensor-Teilsystem (30) an der CCM-Vorrichtung (1) angeordnet ist.

15. Luftverteidigungssystem nach den Ansprüchen 11 bis 14, wobei sich die CCM-Vorrichtung (1) im Wesentlichen an dem gleichen geografischen Standort wie das Flugabwehr-Waffensystem (20) befindet oder sich die CCM-Vorrichtung (1) an einem anderen geografischen Standort befindet.

16. Luftverteidigungssystem nach den Ansprüchen 11 bis 15, wobei eine Auslösesequenz der CCM-Vorrichtung (1) und des Flugabwehr-Waffensystems (20) manuell erfolgt, oder wenn sich die CCM-Vorrichtung (1) an einem anderen geografischen Standort als das Flugabwehr-Waffensystem (20) befindet, die Auslösung der CCM-Vorrichtung (1) und des Flugabwehr-Waffensystems (20) über bekannte Technologien, wie drahtgebunden zum Beispiel Kupfer oder Faser, oder drahtlose Verbindung, wie Wifi, Lora, spezifische militärische Verbindung, gerichtete Mikrowellenverbindung oder laserbasierte Kommunikationsverbindung, fernbedient erfolgt.

17. Luftverteidigungssystem nach den Ansprüchen 11 bis 16, wobei die Auslösesequenz der CCM-Vorrichtung (1) und des Flugabwehr-Waffensystems (20) durch ein Synchronisationssoftwaremodul gesteuert wird, wobei das Synchronisationssoftwaremodul auf der elektronischen Steuerschaltung (4) der CCM-Vorrichtung (1) oder auf einer zusätzlichen elektronischen Schaltung mit Verarbeitungs-, Datenspeicher- und Kommunikationsmöglichkeiten läuft, wobei die zusätzliche elektronische Schaltung durch die Verbindungsmittel (7, 7a), die mit der elektronischen Steuerschaltung (4) und/oder mit der Waffenelektronikschaltung (20a) verbunden sind, erfolgt.

18. Luftverteidigungssystem nach den Ansprüchen 11 bis 17, wobei das Luftverteidigungssystem folgendes umfasst:
- mindestens eine CCM-Vorrichtung (1) nach den Ansprüchen 1 bis 10 und dem auf der CCM-Vorrichtung (1) angeordneten Sensor-Teilsystem (30), wobei das Sensor-Teilsystem (30) zum Erfassen und Sammeln von Informationen über das Luftfahrzeug (10) vor dem Erzeugen und Ausstrahlen von Profilen von simulierten Raketen (3b) oder Störbetrieb ausgeführt ist
- und mindestens ein Flugabwehr-Waffensystem (20), das zum Abschießen mindestens einer Flugabwehrrakete (21) ausgebildet ist, wobei das Auslösen von Profilen von simulierten Raketen (3b) oder dem Störmodus und das Abschießen von Flugabwehrraketen (21) koordiniert sind.

19. Flugabwehrkampf-Verfahren mit dem Luftverteidigungssystem nach den Ansprüchen 11 bis 17, wobei das Verfahren umfasst:
- Schritt A: Auslösen von Profilen von simulierten Raketen (3b) oder einer Sequenz davon oder eines Störmodus in einer Richtung, frontal, seitlich oder hinten eines Luftfahrzeugs (10), sobald sich das Luftfahrzeug (10) innerhalb eines Betriebsbereichs der CCM-Vorrichtung (1) befindet;
- Schritt B: Verriegeln einer Flugabwehrrakete (21) auf dem Flugzeug (10) und Abschießen der Flugabwehrrakete (21) in Richtung des Luftfahrzeugs (10).

20. Flugabwehrkampf-Verfahren nach Anspruch 18, wobei das Verfahren ferner einen Schritt des Detektierens und Bewertens von Informationen über das Flugzeug (10) durch ein Sensor-Teilsystem (30) umfasst, wobei der genannte Schritt vor Schritt A durchgeführt wird.

21. Flugabwehrkampf-Verfahren nach den Ansprüchen 18 und 19, wobei Schritt B dem Schritt A folgt.

22. Flugabwehrkampf-Verfahren nach den Ansprüchen 18 und 19, wobei Schritt A und Schritt B teilweise oder vollständig gleichzeitig sind.

23. Flugabwehrkampf-Verfahren nach Anspruch 19, wobei das Verfahren ferner einen Schritt des Detektierens umfasst, ob das Flugzeug (10) Gegen-Gegenmaßnahmen (12) durch ein Sensor-Teilsystem (30) freigegeben hat, wobei der genannte Schritt vor Schritt B durchgeführt wird.

## Revendications

1. Dispositif de contre-contre-mesure - dispositif CCM (1) destiné à être utilisé dans un combat antiaérien, ledit dispositif CCM (1) étant configuré pour générer et émettre un rayonnement électromagnétique de longueurs d'onde, qui sont détectées par un système d'avertissement et de détection de missile antiaérien (11) installé sur un aéronef (10), ledit dispositif CCM (1) étant constitué d'un module CCM (1a), d'une unité de déclenchement (5) et d'une unité d'alimentation (6), ledit module CCM (1a) étant constitué d'une unité de source électromagnétique (3), comprenant de multiples sources EM (3a) émettant un rayonnement EM, un circuit de commande électronique (4) avec des capacités de traitement, de mémoire et d'entraînement d'unité de source EM (3), **caractérisé en ce que** le dispositif CCM (1) comprend en outre un couvercle (40) pouvant être fixé de manière amovible au module CCM (1a) sur son extrémité avant, ledit couvercle (40) étant opaque au rayonnement émis et ayant au moins une ouverture (41) transparente au rayonnement émis, à travers laquelle seule une partie du rayonnement EM est émise lorsque le couvercle (40) est dans une position fermée, pour permettre le fonctionnement dudit dispositif CCM (1) dans un mode de leurrage et de brouillage et la commutation entre les deux modes en sélectionnant soit la position fermée soit la position ouverte du couvercle (40).

2. Dispositif CCM (1) selon la revendication 1, dans lequel l'unité de source EM (3) est configurée pour émettre une lumière UV non cohérente dans une région aveugle solaire et l'unité de source EM (3) est mise en œuvre sous forme d'un réseau de sources EM individuelles (3a) mis en œuvre sous forme d'une DEL UVC émettant une lumière de la même longueur d'onde ou émettant une lumière de différentes longueurs d'onde, définissant ainsi au moins un profil d'un missile simulé (3b) ou d'un mode de brouillage.

3. Dispositif CCM (1) selon la revendication 1, dans lequel l'unité de déclenchement (5) est configurée pour sélectionner le profil ou une séquence de celui-ci, et pour activer le dispositif CCM (1), comprenant le déclenchement des missiles simulés (3b) ou du mode de brouillage.

4. Dispositif CCM (1) selon la revendication 1, dans lequel le circuit de commande électronique (4) est configuré pour piloter l'unité de source EM (3), pour stocker les profils et les séquences de ceux-ci dans une mémoire, pour recevoir une entrée provenant de l'unité de déclenchement (5) et pour exécuter le module logiciel de contre-contre-mesure qui actionne le dispositif de contre-contre-mesure (1).

5. Dispositif CCM (1) selon la revendication 1, dans lequel le couvercle (40) est fixé au module CCM (1a) par l'intermédiaire d'un ensemble charnière (42) et est maintenu en place lorsqu'il est dans une position fermée ou dans une position ouverte par une connexion mécanique ou par une connexion magnétique ou par une combinaison des deux.

6. Dispositif CCM (1) selon la revendication 1, dans lequel le dispositif CCM (1) comprend en outre un viseur mécanique ou optique (8) installé sur la position supérieure ou latérale d'un boîtier (2) dans lequel le module CCM (1a) est installé.

7. Dispositif CCM (1) selon la revendication 1, dans lequel le dispositif CCM (1) comprend en outre un harnais de fixation (9) pour la fixation du dispositif (1) sur des systèmes d'arme antiaérien (20).

8. Dispositif CCM (1) selon la revendication 1, dans lequel le dispositif CCM (1) est mis en œuvre sous forme d'un dispositif portatif autonome et auto-contenu qui effectue la fonction requise, émettant une longueur d'onde UVC, y compris la fonction de leurrage et de brouillage, le dispositif CCM (1) étant pourvu des moyens ergonomiques pour permettre à l'utilisateur de viser et d'utiliser le dispositif.

9. Dispositif CCM (1) selon la revendication 1, dans lequel le dispositif CCM (1) est mis en œuvre en tant que module de fixation aux armes de petit calibre existants et est fixé aux armes de petit calibre existants par l'intermédiaire du harnais de fixation (9), dans lequel les moyens de déclenchement de l'unité de déclenchement (5) sont intégrés au déclencheur des armes de petit calibre ou ont des moyens de déclenchement séparés.

10. Dispositif CCM (1) selon la revendication 1, dans lequel le dispositif CCM (1) est pourvu de multiples modules CCM (1a) connectés à la même unité de déclenchement (5).

11. Système de défense aérienne, ledit système de défense aérienne constitué de :
- au moins un dispositif CCM (1) selon les revendications 1 à 10 ;
- et d'au moins un système d'arme antiaérien (20) configuré pour lancer au moins un missile antiaérien (21), dans lequel le déclenchement de profils de missiles simulés (3b) ou de mode de brouillage et le lancement de missiles antiaériens (21) sont coordonnés.

12. Système de défense aérienne selon la revendication 11, dans lequel le système d'arme antiaérien (20) comprend en outre un moyen de connexion d'arme (7a) configuré pour connecter un circuit électronique d'arme (20a) au circuit de commande électronique (4) sur le dispositif CCM (1).

13. Système de défense aérienne selon les revendications 11 et 12, le système de défense aérienne comprenant en outre un sous-système de capteur (30) configuré pour détecter et acquérir des informations concernant l'aéronef (10), et/ou pour détecter, analyser et enregistrer ou compter des feux éjectés (12), et/ou pour détecter des lasers IR émis par des systèmes de contre-mesures infrarouges directionnelles sur l'aéronef (10 ).

14. Système de défense aérienne selon la revendication 13, dans lequel le sous-système de capteur (30) est situé sur le dispositif CCM (1).

15. Système de défense aérienne selon les revendications 11 à 14, dans lequel le dispositif CCM (1) est situé essentiellement sur le même emplacement géographique que le système d'arme antiaérien (20), ou le dispositif CCM (1) est situé sur un emplacement géographique différent.

16. Système de défense aérienne selon les revendications 11 à 15, dans lequel une séquence de déclenchement du dispositif CCM (1) et du système d'arme antiaérien (20) est effectuée manuellement, ou lorsque le dispositif CCM (1) est situé sur un emplacement géographique différent que le système d'arme antiaérien (20), le déclenchement du dispositif CCM (1) et du système d'arme antiaérien (20) est effectué à distance par l'intermédiaire de technologies connues, telles qu'une liaison filaire par exemple en cuivre ou en fibre, ou sans fil, telle que WiFi, LoRa, liaison militaire spécifique, liaison hyperfréquence directionnelle ou liaison de communication laser.

17. Système de défense aérienne selon les revendications 11 à 16, dans lequel la séquence de déclenchement du dispositif CCM (1) et du système d'arme antiaérien (20) est commandée par un module logiciel de synchronisation, ledit module logiciel de synchronisation s'exécutant sur le circuit de commande électronique (4) du dispositif CCM (1) ou sur un circuit électronique supplémentaire avec des possibilités de traitement, de stockage de mémoire et de communication, le circuit électronique supplémentaire étant connecté au circuit de commande électronique (4) et/ou au circuit électronique d'arme (20a) à travers les moyens de connexion (7, 7a).

18. Système de défense aérienne selon les revendications 11 à 17, le système de défense aérienne constitué de :
- au moins un dispositif CCM (1) selon les revendications 1 à 10 et d'un sous-système de capteur (30) situé sur le dispositif CCM (1), dans lequel ledit sous-système de capteur (30) est configuré pour détecter et acquérir des informations concernant l'aéronef (10) avant de générer et d'émettre des profils de missiles simulés (3b) ou de mode de brouillage ;
- et d'au moins un système d'arme antiaérien (20) configuré pour lancer au moins un missile antiaérien (21), dans lequel le déclenchement de profils de missiles simulés (3b) ou de mode de brouillage, et le lancement de missiles antiaériens (21) sont coordonnés.

19. Procédé de combat antiaérien comprenant le système de défense aérienne selon les revendications 11 à 17, le procédé comprenant :
- étape A : déclencher des profils de missiles simulés (3b) ou une séquence de ceux-ci ou un mode de brouillage dans une direction, frontalement, latéralement ou à l'arrière d'un aéronef (10), une fois que l'aéronef (10) se trouve dans une plage de fonctionnement du dispositif CCM (1) ;
- étape B : verrouiller un missile antiaérien (21) sur l'aéronef (10) et lancer le missile antiaérien (21) vers l'aéronef (10 ).

20. Procédé de combat antiaérien selon la revendication 18, le procédé comprenant en outre une étape de détection et d'évaluation d'informations concernant l'aéronef (10) par un sous-système de capteur (30), ladite étape étant effectuée avant l'étape A.

21. Procédé de combat antiaérien selon les revendications 18 et 19, dans lequel l'étape B suit l'étape A.

22. Procédé de combat antiaérien selon les revendications 18 et 19, dans lequel l'étape A et l'étape B sont partiellement ou entièrement simultanées.

23. Procédé de combat antiaérien selon la revendication 19, le procédé comprenant en outre une étape de détection si l'aéronef (10) a libéré des contre-contre-mesures (12) par un sous-système de capteur (30), ladite étape étant effectuée avant l'étape B.
